# EUROPÄISCHE PATENTANMELDUNG

(11) **EP 2 058 634 A1**
(43) Veröffentlichungstag der Anmeldung: **13.05.2009**
(21) Anmeldenummer: 07400025.8
(22) Anmeldetag: 06.11.2007
(51) Int. Cl.: G01F 23/296

(54) **Verwendung einer Eisen/Kobalt-Legierung bei der magnetostriktiven Positionsmessung**

(71) Anmelder: FAFNIR GmbH, D-22765 Hamburg (DE)
(72) Erfinder: Schrittenlacher, Wolfgang, 21075 Hamburg (DE)
(74) Vertreter: UEXKÜLL & STOLBERG

(57) **Zusammenfassung**

Eine Eisenbasislegierung mit einem Gehalt an Co im Bereich von 1 Gew.-% bis 40 Gew.-% wird als magnetostriktives Material (14) bei der magnetostriktiven Positionsmessung (1) verwendet. Der Magnetostriktionskoeffizient der Legierung beträgt bei einer Temperatur von 20°C mindestens 15 ∙ 10⁻⁶ und vorzugsweise bei einer Temperatur von 700°C mindestens 7 • 10⁻⁶, was Hochtemperaturanwendungen ermöglicht.

## Beschreibung

Die Erfindung betrifft die Verwendung einer Eisen/Kobalt-Legierung bei der magnetostriktiven Positionsmessung sowie eine magnetostriktive Positionsmessvorrichtung.

Die Positionsbestimmung eines Magneten durch eine magnetostriktive Messung ist seit langem bekannt (siehe z.B. US 3,898,555). Sie wurde zunächst für lineare Positionssensoren und später auch für Vorrichtungen zum Messen des Füllstands von Flüssigkeiten angewendet. Dies ist inzwischen ein etabliertes Verfahren, da es eine kompakte und einfache Bauweise und eine sehr hohe Präzision ermöglicht.

Bei diesem Verfahren wird ein verschiebbarer Positionsgeber, der in der Regel mit einem Permanentmagneten bestückt ist, parallel zu einem Draht oder Rohr aus einem magnetostriktiven Material verschoben. Bei dem Messvorgang wird ein Stromimpuls entweder durch das magnetostriktive Material oder durch einen in der Nähe verlegten nichtmagnetostriktiven Leiter geführt, wobei das erzeugte Magnetfeld den magnetostriktiven Wellenleiter durchdringt. Das Magnetfeld des Positionsmagneten durchflutet das magnetostriktive Material in seiner Nähe und verursacht eine stationäre Striktion. Durch das durch den Strompuls erzeugte Magnetfeld wird ebenfalls eine Striktion hervorgerufen. Durch die Überlagerung der Magnetfelder in der Nähe des Positionsmagneten wird in diesem Bereich ein mechanischer Impuls erzeugt, der sich als Torsionswelle, als longitudinale Welle oder als Überlagerung dieser beiden auf dem Draht oder Rohr (Wellenleiter) ausbreitet. Diese Ultraschallwelle kann dann an einem oder auch an beiden Enden geeignet detektiert werden, z.B. durch Bewegung eines kleinen Magneten, durch eine Spule, in der ein Spannungspuls induziert wird, oder durch die Detektion der elektrischen Spannung, die durch die Deformation von piezoelektrischen Keramiken oder Kristallen entsteht. Die zeitliche Verzögerung des Nachweispulses bezogen auf den Anregungsstrompuls hängt in eindeutiger Weise von der Schallgeschwindigkeit in dem magnetostriktiven Material ab. Da die Zeit mit sehr großer Genauigkeit gemessen werden kann, kann auch die Position sehr genau bestimmt werden.

Die Anwendung des Verfahrens hängt von der Verfügbarkeit von Materialien ab, die einerseits in dem gewünschten Temperaturanwendungsbereich die Aufrechterhaltung eines permanentmagnetischen Feldes und andererseits das Vorhandensein eines magnetostriktiven Effektes ermöglichen.

Die Anwendungstemperaturen bei permantmagnetischen Materialien sind bekannt. Sie liegen etwa bei 130°C für NdFeB , bei 250°C für Hartferrite und bei 350°C bis 400°C für Sm₂Co₁₇. Die höchsten bekannten Daueranwendungstemperaturen sind möglich bei speziellen AlNiCo Legierungen mit ca. 700°C.

Bei den magnetostriktiven Materialien sind die Standardmaterialien das Nickel und das Eisen oder Legierungen davon (PermalloyLegierungen). Der Magnetostriktionseffekt nimmt mit der Temperatur ab und verschwindet bei der Curietemperatur.

Eisen hat zwar eine hohe Curietemperatur von 766°C, jedoch ist die Magnetostriktion relativ schwach und ein Wellenleiter aus Eisen ist stark korrosionsgefährdet und oxidiert insbesondere bei hohen Anwendungstemperaturen. Eine Korrosionsschutzbeschichtung dünner Wellenleiter (Drähte) wäre sehr aufwändig. Besser sind Permalloylegierungen, die aber nur bis knapp 600°C eine Magnetostriktion zeigen.

Nach dem Stand der Technik konnten bisher bei magnetostriktiven Füllstands- oder Positionsmessvorrichtungen nur Anwendungstemperaturen von maximal 450°C erreicht werden.

Es ist Aufgabe der Erfindung, verbesserte Möglichkeiten für die magnetostriktive Positionsmessung zu schaffen und insbesondere eine magnetostriktive Positionsmessung bei hohen Temperaturen zu möglichen, z.B. bei Anwendungstemperaturen von mehr als 450°C oder auch noch höheren Temperaturen.

Diese Aufgabe wird gelöst durch eine Verwendung einer vorbekannten Legierung als magnetostriktives Material gemäß Anspruch 1 sowie durch eine magnetostriktive Postionsmessvorrichtung gemäß Anspruch 7. Vorteilhafte Ausgestaltungen der Erfindung ergeben sich aus den Unteransprüchen.

Die erfindungsgemäße Verwendung sieht eine Eisenbasislegierung mit einem Gehalt an Co im Bereich von 1 Gew.-% bis 40 Gew.-% als magnetostriktives Material bei der magnetostriktiven Positionsmessung vor. Dabei kommen solche Eisen/Kobaltlegierungen in Frage, die bei einer Temperatur von 20°C einen Magnetostriktionskoeffizienten von mindestens 15·10⁻⁶ aufweisen.

In einer magnetostriktiven Postionsmessvorrichtung liegt das magnetostriktive Material in der Regel als Draht oder Rohr vor. Um derartige Formen fertigen zu können, sollte das Material duktil sein. Eisenbasislegierungen mit einem Co-Gehalt von mehr als 40 Gew.-% sind spröde. Wenn der Co-Gehalt kleiner als 1 Gew.-% ist, führt die Zulegierung von Kobalt nicht mehr zu einer nennenswerten Verbesserung der magnetostriktiven Eigenschaften.

Der Magnetostriktionskoeffizient ist definiert als die relative Längenänderung einer Probe aus dem zu untersuchenden magnetostriktiven Material in einem starken Magnetfeld unter Sättigungsbedingungen. D.h., das Magnetfeld ist so stark, dass alle magnetischen Bezirke der Probe ausgerichtet sind. Messverfahren für den Magnetostriktionskoeffizienten sind einem Fachmann zugänglich.

Bei bevorzugten Ausführungsformen der Erfindung weist die Legierung bei einer Temperatur von 700°C einen Magnetostriktionskoeffizienten von mindestens 7·10⁻⁶, vorzugsweise mindestens 10·10⁻⁶ auf. Bei einem derart großen Magnetostriktionskoeffizienten bei der hohen Temperatur von 700°C ist die Legierung sehr gut für Hochtemperaturanwendungen geeignet.

Bei bevorzugten Ausführungen der Erfindung liegt der Co-Gehalt der Legierung im Bereich von 10 Gew.-% bis 20 Gew.-%. Dabei kann die Legierung zusätzlich einen Gehalt von wenigstens einem der Elemente der Gruppe Cr, Mo und V von 2 bis 6,5 Gew.-% aufweisen, während der Gehalt an Ni zusammen mit Mn zwischen 0,01 Gew.-% und 0,4 Gew.-% sowie der Gehalt an C unter 0,02 Gew.-% liegen sollte. Besonders vorteilhaft ist eine Co-Gehalt der Legierung im Bereich von 16 bis 18 Gew.-%.

Derartige Legierungen sind in der EP 1 217 087 A1 im Detail beschrieben, wozu in dieser Schrift zahlreiche Ausführungsbeispiele angegeben sind. Der Offenbarungsgehalt der EP 1 217 087 A1 wird ausdrücklich in die vorliegende Anmeldung aufgenommen. Die in dieser Schrift genannten Eisenbasislegierungen sind magnetostriktive Materialien im Sinne der vorliegenden Erfindung, wenn sie die Kriterien an den Magnetostriktionskoeffizienten gemäß Anspruch 1 bzw. - insbesondere für Hochtemperaturanwendungen - Anspruch 2 erfüllen. Grundsätzlich lassen sich diese Legierungen auch als magnetostriktives Material bei der magnetostriktiven Positionsmessung in Anwendungen bei niedrigeren Temperaturen (z.B. bei Raumtemperatur) benutzen.

Wie bereits erwähnt, ist ein Co-Gehalt der Legierung im Bereich von 16 Gew.-% bis 18 Gew.-% besonders vorteilhaft, wozu weiter unten ein Ausführungsbeispiel angegeben ist. In diesem Ausführungsbeispiel beträgt die Curietemperatur des magnetostriktiven Materials 920°C, liegt also erheblich höher als die bereits hohe Curietemperatur von Eisen (766°C). Eine hohe Curietemperatur ist ebenfalls eine Voraussetzung für eine Anwendung des magnetostriktiven Effekts bei hohen Temperaturen. Denn oberhalb der Curietemperatur tritt der Effekt nicht mehr ein.

Bei einer erfindungsgemäßen magnetostriktiven Positionsmessvorrichtung wird eine Legierung mit den oben genannten Merkmalen als magnetostriktives Material benutzt. Insbesondere kann eine derartige magnetostriktive Positionsmessvorrichtung einen Messdraht oder ein Messrohr aus einer solchen Legierung enthalten, entlang dem ein Permanentmagnet bewegbar ist. Ferner ist eine Betriebselektronik vorgesehen. Die magnetostriktive Positionsmessvorrichtung ist im Prinzip so aufgebaut und geschaltet wie eine herkömmliche magnetostriktive Positionsmessvorrichtung und lässt sich z.B. für Längenmessungen oder für Füllstandsmessungen einsetzen. Im letzteren Fall kann der Messdraht oder das Messrohr z.B. von einem Schutzrohr umgeben sein, das gleichzeitig als Führung für einen Schwimmer dient, in den der Permanentmagnet eingebaut ist. Wenn diese Anordnung in eine Flüssigkeit eintaucht und sich der Schwimmer im Bereich des Flüssigkeitspegels befindet, kann der Füllstand wie bei den aus dem Stand der Technik bekannten Vorrichtungen bestimmt werden.

Die erfindungsgemäße magnetostriktive Positionsmessvorrichtung ist bei bevorzugten Ausführungsformen für hohe Anwendungstemperaturen ausgestaltet, z.B. für Anwendungstemperaturen von mehr als 450°C oder mehr als 500°C oder sogar mehr als 650°C. Die betrachteten magnetostriktiven Materialien sind dafür geeignet.

Um solch hohe Anwendungstemperaturen zu ermöglichen, muss aber auch eine geeignete Legierung für den Permanentmagneten ausgewählt werden. AlNiCo-Legierungen haben eine Curietemperatur von etwa 860°C und erlauben Anwendungen bis zu 700°C. Sm2Co17-Legierungen sind in der Regel für Arbeitstemperaturen bis 350°C vorgesehen; aus dieser Klasse gibt es aber auch Legierungen, die Arbeitstemperaturen von bis zu 550°C ermöglichen.

Für einen Fachmann ist es selbstverständlich, dass bei einer für hohe Temperaturen ausgelegten magnetostriktiven Positionsmessvorrichtung auch die übrigen Komponenten angepasst sein müssen, wie z.B. die Isoliermaterialien, die Technik für elektrische Verbindungen, Spann- oder Befestigungseinrichtungen für den Messdraht oder das Messrohr aus dem magnetostriktiven Material, das Material für das Schutzrohr, usw.

Ferner sollte die Betriebselektronik von dem Hochtemperaturbereich thermisch entkoppelt sein, da die Grenztemperaturen für übliche Elektronik im Bereich von ca. 80°C liegen. Dies lässt sich relativ einfach realisieren, indem die Betriebselektronik weit genug von dem Hochtemperaturbereich entfernt angeordnet wird. Wenn das Schutzrohr aus schlecht wärmeleitendem Material besteht, z.B. aus austenitischem Edelstahl, kann ein die Betriebselektronik enthaltendes Gehäuse außerhalb des Hochtemperaturbereichs sogar direkt mit dem Schutzrohr verbunden sein.

Im Folgenden wird die Erfindung anhand von Ausführungsbeispielen weiter beschrieben. Die Zeichnung zeigt in:

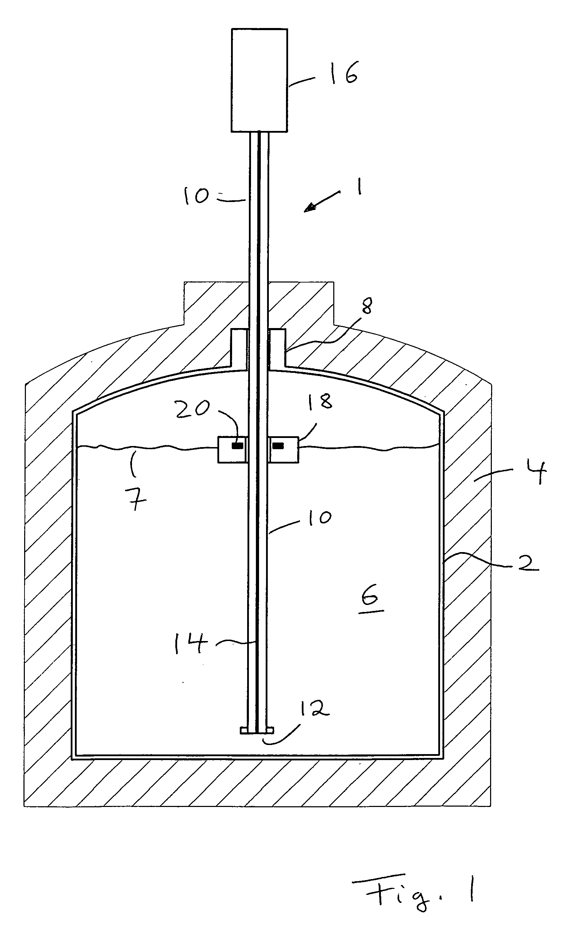

- Figur 1: eine schematische Ansicht einer Ausführungsform der erfindungsgemäßen magnetostriktiven Positionsmessvorrichtung, die an einem Hochtemperaturbehälter angeordnet ist, um den Füllstand (Pegel) einer darin befindlichen Flüssigkeit zu bestimmen.

Die in Figur 1 dargestellte magnetostriktive Positionsmessvorrichtung ist als Füllstandmessvorrichtung 1 ausgestaltet.

Die Füllstandmessvorrichtung 1 ist an einem Behälter 2 angeordnet, der von einer Wärmeisolierung 4 umgeben ist. In dem Behälter 2 befindet sich eine Flüssigkeit 6 mit einem Pegel 7, die eine hohe Temperatur hat.

Durch einen Stutzen 8 im oberen Bereich des Behälters 2 ist ein Schutzrohr 10 der Füllstandmessvorrichtung 1 geführt, das im Ausführungsbeispiel aus Edelstahl gefertigt ist und daher eine schlechte Wärmeleitfähigkeit aufweist. Das Schutzrohr 10 hat ein unteres Ende 12, an dem das Schutzrohr 10 geschlossen ist. Von dort aus erstreckt sich im Innenraum des Schutzrohrs 10 ein magnetostriktiver Messdraht 14, der bis in eine Betriebselektronik 16 geführt ist, die am oberen Ende des Schutzrohrs 10 angeordnet ist. Ferner befindet sich im Innenraum des Schutzrohrs 10 ein in Figur 1 nicht dargestellter Rückdraht für den magnetostriktiven Messdraht 14.

Die Betriebselektronik 16 ist ein größeres Stück außerhalb des Behälters 2 angeordnet und wegen der schlechten thermischen Leitfähigkeit des Materials des Schutzrohrs 10 und der Länge des außerhalb des Behälters 2 befindlichen Abschnitts des Schutzrohrs 10 weitgehend thermisch entkoppelt von der heißen Flüssigkeit 6.

Von dem Schutzrohr 10 wird ein Schwimmer 18 geführt, in den ein Permanentmagnet 20 eingebaut ist. Der Permanentmagnet 20 bewegt sich mit dem Pegel 7 entlang des Schutzrohrs 10, so dass die Höhe des Pegels 7 und somit der Füllstand der Flüssigkeit 6 in dem Behälter 2 durch eine magnetostriktive Positionsmessung bestimmt werden kann.

Die magnetostriktive Füllstandmessvorrichtung 1 unterscheidet sich von den im Stand der Technik bekannten Vorrichtungen durch das Material des magnetostriktiven Messdrahts 14, der im Ausführungsbeispiel aus dem im nachfolgenden Beispiel beschriebenen Material hergestellt ist. Ferner ist der Permanentmagnet 20 aus einer AlNiCo-Legierung mit einer Curietemperatur von ca. 860°C gefertigt, was Anwendungen bis zu ca. 700°C ermöglicht. Die mechanischen Teile und elektrischen Verbindungen der magnetostriktiven Füllstandmessvorrichtung 1 sind ebenfalls für hohe Temperaturen und auch für große Temperaturwechsel ausgelegt.

Seitens der Betriebselektronik 16 erfolgt eine Füllstandsmessung in aus dem Stand der Technik bekannter Weise.

### Beispiel

Der magnetostriktive Messdraht 14 wurde von der Vacuumschmelze GmbH & Co. KG, Hanau, unter der Bezeichnung "Vacoflux 17" bezogen und hat einen Durchmesser von 0,6 mm.

Die Legierung für das Material "Vacoflux 17" enthält Eisen als Basismaterial und ferner einen Co-Anteil von 17,0 Gew.-%. Darüber hinaus können 2,0 Gew.-% Cr, 0,8 Gew.-% Mo und bis zu 0,2 Gew.-% V enthalten sein.

Dieses Material besitzt nach Angaben des Herstellers eine Curietemperatur von 920°C und einen Magnetostriktionskoeffizienten (Sättigungsmagnetostriktion) von 25·10⁻⁶, bezogen auf Raumtemperatur (20°C).

Mit diesem Material für den Messdraht 14 ließ sich ein magnetostriktiver Messeffekt bis zu einer Temperatur von über 800°C nachweisen. Bei einer solchen Temperatur verlieren AlNiCo-Magnete (Curietemperatur ca. 860°C) ihre Magnetisierung, so dass die Anwendungstemperatur einer magnetostriktiven Positionsmessvorrichtung mit einem Permanentmagneten aus einer AlNiCo-Legierung auf die höchsten Anwendungstemperaturen eines derartigen Permanentmagneten begrenzt ist, d.h. auf ca. 700°C.

## Patentansprüche

1. Verwendung einer Eisenbasislegierung mit einem Gehalt an Co im Bereich von 1 Gew.-% bis 40 Gew.-% als magnetostriktives Material bei der magnetostriktiven Positionsmessung, wobei die Legierung bei einer Temperatur von 20°C einen Magnetostriktionskoeffizienten von mindestens 15·10⁻⁶ aufweist.

2. Verwendung nach Anspruch 1, wobei die Legierung bei einer Temperatur von 700°C einen Magnetostriktionskoeffizienten von mindestens 7·10⁻⁶ aufweist, vorzugsweise von mindestens 10·10⁻⁶_{.}

3. Verwendung nach Anspruch 1 oder 2, **dadurch gekennzeichnet, dass** der Co-Gehalt der Legierung im Bereich von 10 Gew.-% bis 20 Gew.-% liegt.

4. Verwendung nach Anspruch 3, **dadurch gekennzeichnet, dass** die Legierung einen Gehalt von wenigstens einem der Elemente der Gruppe Cr, Mo und V von 2 bis 6,5 Gew.-% aufweist und dass der Gehalt an Ni zusammen mit Mn zwischen 0,01 Gew.-% und 0,4 Gew.-% sowie der Gehalt an C unter 0,02 Gew.-% liegt.

5. Verwendung nach Anspruch 3 oder 4, **dadurch gekennzeichnet, dass** der Co-Gehalt der Legierung im Bereich von 16 Gew.-% bis 18 Gew.-% liegt.

6. Verwendung nach einem der Ansprüche 1 bis 5, **dadurch gekennzeichnet, dass** die Curietemperatur der Legierung mindestens 850°C beträgt.

7. Magnetostriktive Positionsmessvorrichtung, **gekennzeichnet durch** die Verwendung einer Legierung mit den in einem der Ansprüche 1 bis 6 angegebenen Merkmalen als magnetostriktives Material.

8. Magnetostriktive Positionsmessvorrichtung nach Anspruch 7, **gekennzeichnet durch** einen Messdraht (14) oder ein Messrohr aus einer Legierung mit den in einem der Ansprüche 1 bis 6 angegebenen Merkmalen, entlang dem ein Permanentmagnet (20) bewegbar ist, und eine Betriebselektronik (16).

9. Magnetostriktive Positionsmessvorrichtung nach Anspruch 8, **gekennzeichnet durch** eine für hohe Anwendungstemperaturen geeignete Ausgestaltung, die vorzugsweise für Anwendungstemperaturen von mehr als 450°C und besonders bevorzugt für Anwendungstemperaturen von mehr als 500°C ausgelegt ist.

10. Magnetostriktive Positionsmessvorrichtung nach Anspruch 9, **gekennzeichnet durch** eine für Anwendungstemperaturen von mehr als 650°C geeignete Ausgestaltung.

11. Magnetostriktive Positionsmessvorrichtung nach Anspruch 9 oder 10, **dadurch gekennzeichnet, dass** der Permanentmagnet (20) aus einer AlNiCo-Legierung gefertigt ist.

12. Magnetostriktive Positionsmessvorrichtung nach einem der Ansprüche 9 bis 11, **dadurch gekennzeichnet, dass** die Betriebselektronik (16) von dem Hochtemperaturbereich thermisch entkoppelt ist.
